# EUROPÄISCHE PATENTSCHRIFT

(11) **EP 4 418 214 B1**
(45) Veröffentlichungstag und Bekanntmachung des Hinweises auf die Patenterteilung: **14.10.2026**
(21) Anmeldenummer: 24154323.0
(22) Anmeldetag: 29.01.2024
(51) Int. Cl.: G06V 10/25, G06V 10/764, G06V 10/82

(54) **TECHNIK ZUM PRÜFEN EINES ELEKTRISCHEN VERTEILERS**
TECHNIQUE FOR TESTING AN ELECTRICAL DISTRIBUTION BOARD
TECHNIQUE DE TEST D'UN DISTRIBUTEUR ÉLECTRIQUE

(30) Priorität: 15.02.2023 DE 102023103682
(43) Veröffentlichungstag der Anmeldung: 21.08.2024
(73) Patentinhaber: E.ON SE, 45131 Essen (DE)
(72) Erfinder: Kempgens, Maren, 46238 Bottrop (DE); Maragna, Maralena, 44139 Dortmund (DE); Muzadique, Nazeel, 42549 Velbert (DE); Reimann, Katja, 40489 Düsseldorf (DE)
(74) Vertreter: Gunzelmann, Rainer

(56) Entgegenhaltungen:
- VITO BARBARA: "A Loosely-coupled Neural-symbolic approach to Compliance of Electric Panels", 1 July 2022 (2022-07-01), XP093167086, Retrieved from the Internet <URL:https://air.uniud.it/bitstream/11390/1248989/1/paper_24.pdf> [retrieved on 20240529]

## Beschreibung

### TECHNISCHES GEBIET

Die vorliegende Offenbarung betrifft eine Technik zum Prüfen eines elektrischen Verteilers. Insbesondere werden ein Prüfverfahren und ein Prüfmodul für einen elektrischen Verteiler in einem Niederspannungsnetz, ein Nutzer-Client, ein Prüfsystem, ein Verfahren zum Trainieren eines Objekterkennungsmoduls und ein Objekterkennungsmodul offenbart.

### HINTERGRUND

Viele Haushalte, Gewerbe und öffentliche Einrichtungen wollen eine Ladestation zum Laden von Elektrofahrzeugen mit elektrischer Energie, eine sogenannte "Wallbox", installieren. Zur Installation einer Wallbox ist es notwendig, dass der elektrische Verteiler (umgangssprachlich auch "Verteilerkasten" genannt), an den die Wallbox angeschlossen werden soll, einige Voraussetzungen erfüllt. Beispielsweise müssen freie Steckplätze in dem elektrischen Verteiler vorhanden sein, damit die Wallbox betreffende elektrische Komponenten in dem elektrischen Verteiler installiert werden können. Ferner muss für die Installation der Wallbox dem Installateur bekannt sein, welche elektrische Komponenten bereits in dem elektrischen Verteiler eingebaut sind.

Um die Installationsvoraussetzungen für die Wallbox zu prüfen, ist es meist notwendig, dass ein Servicetechniker im Rahmen eines ersten Besichtigungstermins zu dem elektrischen Verteiler fährt und diesen in Augenschein nimmt. Ein Ergebnis eines solchen Termins kann jedoch sein, dass eine Installation einer Wallbox mit dem vorhanden elektrischen Verteiler nicht möglich ist. Um solche nicht erfolgreichen Besichtigungstermine zu vermeiden ist es bekannt, dass ein Kunde ein Online-Formular über die Beschaffenheit des elektrischen Verteilers ausfüllt und dieses an den Installateur sendet. Viele Kunden fühlen sich jedoch bei dem Ausfüllen des Online-Formulars überfordert, so dass sie von der Installation einer Wallbox Abstand nehmen, was die angestrebte Energiewende von Verbrennungsmotoren zur Elektromobilität ohne CO₂-Ausstoss erschwert.

Das Dokument Vito Barbara: "A Loosely-coupled Neural-symbolic approach to Compliance of Electric Panels", 1. Juli 2022, beschreibt Arbeiten im Projekt MAP4ID "Multipurpose Analytics Platform 4 Industrial Data". Ein Ziel des Projekts ist es, geeignete Kombinationen aus maschinellem Lernen und Answer Set Programming (ASP) für industrielle Problemstellungen zu entwickeln. Der Fokus liegt auf einem konkreten Anwendungsfall, bei dem Deep Learning und ASP kombiniert werden, um die Übereinstimmung von Schaltschränken mit technischen Bauplänen zu prüfen. Die vorgeschlagene Lösung besteht aus einer Objekterkennung auf Basis tiefer neuronaler Netze, die Bauteile in Bildern von Schaltschränken identifiziert, sowie aus einem Logikprogramm, das diese Informationen nutzt, um die Konformität des abgebildeten Schaltschranks mit dem Schaltplan zu überprüfen.

### KURZER ABRISS

Der vorliegenden Offenbarung liegt die Aufgabe zugrunde, eine Technik zum Prüfen eines elektrischen Verteilers in einem Niederspannungsnetz bereitzustellen, welche eine Prüfung eines elektrischen Verteilers auf Eignung zum Anschluss einer Wallbox ermöglicht.

Zur Lösung dieser Aufgabe wird ein Prüfverfahren für einen elektrischen Verteiler in einem Niederspannungsnetz gemäß Anspruch 1 vorgeschlagen, dass die Schritte Erhalten eines digitalen Bildes des elektrischen Verteilers, Zuführen des digitalen Bildes einem ersten Objekterkennungsmodul zum Ausführen einer ersten Objekterkennung in dem digitalen Bild zum Erkennen einer elektrischen Komponente, Erhalten eines Ergebnisses der ersten Objekterkennung und
Ausgeben eines Prüfergebnisses in Abhängigkeit von dem Ergebnis der ersten Objekterkennung umfasst.

Bei dem elektrischen Verteiler kann es sich um einen verschließbaren Kasten (z.B. einen Schaltschrank) handeln, in dem Sicherungs- und Schaltelemente zur Verteilung von elektrischer Energie im Bereich eines Niederspannungsnetzes untergebracht sind. Der elektrische Verteiler befindet sich üblicherweise in einem elektrifizierten Gebäude. Der elektrische Verteiler kann eine Vielzahl von Tragschienen zum Befestigen von elektrischen Komponenten in dem elektrischen Verteiler und eine Vielzahl von Steckplätzen, an die die elektrischen Komponenten angeschlossen werden können, umfassen. Die elektrischen Komponenten und freien Steckplätze können auch unabhängig von Tragschienen vorgesehen sein. Die Vielzahl von elektrischen Komponenten kann insbesondere eine oder mehrere der folgenden Komponenten umfassen: Reihenklemmen, Leitungsschutzschalter, Fehlerstrom-Schutzschalter, Fehlerlichtbogen-Schutzeinrichtungen, Beleuchtungstransformatoren, Klingeltransformatoren, Meldeleuchten, Messwandler, Relais, Schalter, Schmelzsicherungen, Schütze, Schutzkontaktsteckdosen, selektive Leitungsschutzschalter, speicherprogrammierbare Steuerungen und andere Automationskomponenten, Stromstoßschalter, Treppenlicht-Zeitschalter, Überspannungsableiter, Zeitschaltuhren, Sammelschienen, Stromzähler und Datenfernübertragungssysteme. Die Steckplätze können frei oder belegt sein und unterschiedliche Abmessungen aufweisen.

Das digitale Bild des elektrischen Verteilers kann mit Hilfe einer digitalen Kamera, beispielsweise einer Kamera in einem Mobilfunkgerät, aufgenommen werden und über ein Kommunikationsnetz, beispielsweise das Internet, an ein Prüfmodel, welches das Prüfverfahren ausführt, gesendet werden. Das von dem Prüfmodel empfangene digitale Bild wird einem ersten Objekterkennungsmodul zum Ausführen einer ersten Objekterkennung in dem digitalen Bild zum Erkennen einer elektrischen Komponente zugeführt. Beispielsweise kann das Prüfmodel das digitale Bild an einen Cloudrechner als erstes Objekterkennungsmodul, wie beispielsweise den Azure Cognitive Service der Firma Microsoft, senden. In dem ersten Objekterkennungsmodul wird eine erstes Objekterkennungsverfahren ausgeführt. Das erste Objekterkennungsmodul kann auch in dem Prüfmodul integriert sein.

Das erste Objekterkennungsverfahren kann beispielsweise eine Bildklassifizierung umfassen, durch die kategorisiert (klassifiziert) wird, ob eine elektrische Komponente in dem Bild vorhanden ist oder nicht. Die Kategorisierung erfolgt anhand einer Wahrscheinlichkeit.

Das erste Objekterkennungsverfahren kann auch auf einem Deep Learning-Verfahren basieren. So kann die Erkennung der elektrischen Komponente mit Hilfe einer sogenannten "Bounding Box" erfolgen. Beispielsweise kann ein einstufiges neuronales Netz verwendet werden, in dem ein Convolutional Neural Network (CNN) mit Hilfe von Ankerboxen Netzvorhersagen für Regionen im gesamten Bild trifft, wobei die Vorhersagen dekodiert werden, um Bounding Boxen für Objekte, d.h., die elektrischen Komponenten, zu erzeugen.

Ferner kann das erste Objekterkennungsverfahren auch von einem zweistufigen neuronalen Netz ausgeführt werden. In einer ersten Phase des zweistufigen Netzes, wie beispielsweise ein Region Based CNN (R-CNN), werden Regionsvorschläge identifiziert, d.h. Teilmengen des digitalen Bildes, die ein Objekt enthalten könnten. In der zweiten Stufe werden Objekte, d.h., die elektrischen Komponenten, innerhalb der vorgeschlagenen Regionen klassifiziert.

Das Objekterkennungsverfahren kann auch auf Techniken zum maschinellen Lernen (ML), wie beispielsweise einer Technik für aggregierte Kanalmerkmale (ACF), Support Vector Machine (SVM)-Klassifizierung unter Verwendung von Histograms of Oriented Gradient (HOG)-Merkmalen, oder einem Viola-Jones- Erkennungsalgorithmus basieren.

Bei dem Ergebnis der ersten Objekterkennung kann es sich um einen Wahrscheinlichkeitswert handeln, dass es sich bei einem in dem digitalen Bild erkannten Objekt um eine elektrische Komponente handelt. Übersteigt der Wahrscheinlichkeitswert beispielsweise einen Schwellenwert, so wird davon ausgegangen, dass es sich tatsächlich um die erkannte elektrische Komponente handelt. Das Ergebnis der ersten Objekterkennung kann eine JavaScript Object Notation (JSON) mit einer oder einer Vielzahl von elektrischen Komponenten und zugehörigen Wahrscheinlichkeiten umfassen.

Vorzugsweise handelt es sich bei der elektrischen Komponente um eine zum Laden eines Elektrofahrzeugs mit elektrischer Energie notwendige Komponente.

Vor der ersten Objekterkennung kann das digitale Bild aufbereitet werden. Dazu kann das digitale Bild auf eine definierte Eingangsgröße für ein neuronales Netz umgewandelt werden. Anschließend wird das umgewandelte digitale Bild in dem ersten Objekterkennungsmodul analysiert. Die Aufbereitung des digitalen Bildes kann in dem Prüfmodul oder dem ersten Objekterkennungsmodul erfolgen.

Das Prüfergebnis wird in Abhängigkeit von dem Ergebnis der ersten Objekterkennung ausgegeben. Beispielsweise kann es für einen Anschluss einer Wallbox an dem elektrischen Verteiler notwendig sein, dass in dem elektrischen Verteiler ein Smart Meter Gateway (SMGW) eingebaut ist. Wird nun durch die erste Objekterkennung kein SMGW in dem digitalen Bild erkannt, so wird davon ausgegangen, dass in dem elektrischen Verteiler kein SMGW eingebaut ist. In diesem Fall würde das Prüfergebnis die Information umfassen, dass der elektrische Verteiler zum Anschluss einer Wallbox nicht geeignet ist. Beispielsweise könnte das Prüfergebnis die weitere Information umfassen, dass der elektrische Verteiler erst mit einem SMGW modernisiert werden muss, ehe eine Wallbox angeschlossen werden kann.

Das Ergebnis der ersten Objekterkennung kann ferner eine Position der elektrischen Komponente in dem digitalen Bild umfassen. In diesem Fall umfasst das Verfahren die weiteren Schritte Vergleichen der Position der elektrischen Komponente mit einer ersten vorgegebenen Position und Ausgeben des Prüfergebnisses in Abhängigkeit von dem Vergleich. Beispielsweise kann das Prüfmodul prüfen, ob ein von der dem ersten Objekterkennungsmodul erkanntes SMGW an einer Position in dem elektrischen Verteiler installiert ist, so dass elektrische Komponenten für die Wallbox ohne wesentlichen Verkabelungsaufwand im dem elektrischen Verteiler installiert werden können. Die Prüfung kann aber auch das Ergebnis liefern, dass der Verkabelungsaufwand zu groß ist, so dass das Prüfergebnis eine Eignung des elektrischen Verteilers zum Anschluss einer Wallbox verneint.

Das Objekterkennungsverfahren kann ferner dazu eingerichtet sein, eine Vielzahl von elektrischen Komponenten, insbesondere eine Vielzahl unterschiedlicher elektrischer Komponenten, zu erkennen. Entsprechend können Wahrscheinlichkeiten für die Vielzahl unterschiedlicher elektrischer Komponenten ausgegeben werden.

Das Verfahren umfasst die weiteren Schritte Zuführen des digitalen Bildes einem zweiten Objekterkennungsmodul zum Ausführen einer zweiten Objekterkennung in dem digitalen Bild zum Erkennen eines freien Steckplatzes für eine elektrische Komponente und einer Position des freien Steckplatzes in dem digitalen Bild und Erhalten eines Ergebnisses der zweiten Objekterkennung. Diese Verfahrensschritte können von dem Prüfmodul ausgeführt werden. Bei dem zweiten Objekterkennungsmodul und dem ersten Objekterkennungsmodul kann es sich um verschiedene Objekterkennungsmodule oder ein Objekterkennungsmodul handeln. Das zweite Objekterkennungsmodul kann auch in dem Prüfmodul vorgesehen sein. Insbesondere kann das zweite Objekterkennungsmodul die Erkennung des freien Steckplatzes mit den gleichen Verfahren wie die vorstehend beschriebenen Verfahren des ersten Objekterkennungsmoduls ausführen. Bei dem freien Steckplatz handelt es sich insbesondere um einen Steckplatz für eine elektrischen Komponente, die zum Laden eines Elektrofahrzeugs mit elektrischer Energie bzw. zum Anschluss einer Wallbox notwendig ist. Der Steckplatz weist dabei einen elektrischen Anschluss auf, der mit weiteren Komponenten bzw. Steckplätzen in dem elektrischen Verteiler elektrisch verbunden ist. Beispielsweise kann es zum Anschluss der Wallbox notwendig sein, dass eine elektrische Komponente in den freien Steckplatz gesteckt wird.

Um die Eignung des elektrischen Verteilers zum Anschluss einer Wallbox weiter zu prüfen, kann das Verfahren den zusätzlichen Verfahrensschritt Vergleichen der Position des freien Steckplatzes mit einer zweiten vorgegebenen Position umfassen, wobei das Ausgeben des Prüfergebnisses vom Vergleich der Position des freien Steckplatzes mit der zweiten vorgegebenen Position abhängt. Beispielsweise kann das Prüfmodul prüfen, ob ein von dem zweiten Objekterkennungsmodul erkannter freier Steckplatz an einer Position in dem elektrischen Verteiler angeordnet ist, so dass elektrische Komponenten für die Installation der Wallbox ohne wesentlichen Verkabelungsaufwand in den freien Steckplatz gesteckt werden können. Die Prüfung kann auch das Ergebnis liefern, dass der Verkabelungsaufwand zu groß ist, so dass das Prüfergebnis eine Eignung des elektrischen Verteilers zum Anschluss einer Wallbox verneint.

Für eine verbesserte Erkennung eines freien Steckplatzes in dem elektrischen Verteiler umfasst das Verfahren den weiteren Schritt Zuführen des Ergebnisses der ersten Objekterkennung, insbesondere die Position der elektrischen Komponente, dem zweiten Objekterkennungsmodul, so dass das Erkennen der Position des freien Steckplatzes in Abhängigkeit von dem Ergebnis der ersten Objekterkennung, insbesondere in Abhängigkeit von der Position der elektrischen Komponente, erfolgt. Beispielsweise kann die zweite Objekterkennung berücksichtigen, dass direkt neben installierten elektrischen Komponenten, die in Steckplätze gesteckt sind, mit einer erhöhten Wahrscheinlichkeit freie Steckplätze vorhanden sind. So kann dieser Verfahrensschritt auch zur Verifizierung der zweiten Objekterkennung verwendet werden.

Das zweite Objekterkennungsverfahren kann ferner zum Erkennen einer Vielzahl von freien Steckplätzen verwendet werden.

Das Ergebnis der zweiten Objekterkennung kann ferner einer Größe des freien Steckplatzes umfassen. In diesem Fall kann das Verfahren den weiteren Schritt Vergleichen der Größe des freien Steckplatzes mit einer vorgegebenen Größe umfassen, wobei das Ausgeben des Prüfergebnisses von dem Vergleich der Größe des freien Steckplatzes mit der vorgegebenen Größe abhängt. Insbesondere handelt es sich bei der vorgegebenen Größe um eine Größe einer zum Laden eines Elektrofahrzeugs mit elektrischer Energie notwendigen Komponente, die in dem elektrischen Verteiler fehlt. Beispielsweise können in einem elektrischen Verteiler eine Vielzahl von Steckplätzen mit unterschiedlichen Längen vorhanden sein, wobei nur für Steckplätze mit einer bestimmten Länge passende elektrische Komponenten für die Wallbox existieren. Ist kein Steckplatz mit einer erforderlichen Größe frei, so kann das Prüfergebnis die Information umfassen, dass der elektrische Verteiler für eine Installation einer Wallbox ungeeignet ist.

Für eine vereinfachte Vorbereitung auf eine Installation einer Wallbox kann das Verfahren ferner den Schritt Bestimmen, basierend auf dem Ergebnis der ersten Objekterkennung und dem Ergebnis der zweiten Objekterkennung, einer Länge eines elektrischen Kabels zwischen einer Position der elektrischen Komponente und einer Position des freien Steckplatzes, umfassen. Dadurch kann einem Installateur schon vor der Installation der Wallbox mitgeteilt werden, wieviel Kabel er zur Installation der Wallbox vorsehen muss, was hilft, Zweittermine zu vermeiden.

Das erste Objekterkennungsmodul und/oder das zweite Objekterkennungsmodul kann ein Deep Neuronal Network umfassen. Zur Verbesserung der Objekterkennungsergebnisse kann das erste Objekterkennungsmodul und/oder das zweite Objekterkennungsmodul trainiert werden. Dazu kann das Verfahren die folgenden Schritte umfassen: Verifizieren des Ergebnisses der ersten Objekterkennung und Zuführen des verifizierten Ergebnisses der ersten Objekterkennung dem ersten Objekterkennungsmodul zum Trainieren des Deep Neuronal Network. Die gleichen Verfahrensschritte können auch für das zweite Objekterkennungsmodul ausgeführt werden, wenn es ein zu trainierendes Deep Neuronal Network umfasst. Beispielsweise wird von einem Nutzer eine Erkennung einer ersten elektrischen Komponente durch das erste Objekterkennungsmodul bestätigt bzw. verifiziert. Anschließend wird das verifizierte Ergebnis der ersten Objekterkennung dem ersten Objekterkennungsmodul zum Trainieren des Deep Neuronal Networks zugeführt. Das trainierte bzw. weiter trainierte erste Objekterkennungsmodul wird anschließend zur ersten Objekterkennung verwendet.

Die vorstehende Offenbarung bezieht sich auf eine Erkennung von elektrischen Komponenten in einem elektrischen Verteiler. Es versteht sich, dass die vorstehend beschriebene Technik auch für eine Erkennung von nicht-elektrischen Komponenten in einem elektrischen Verteiler eingesetzt werden kann. Des Weiteren bezieht sich die vorstehende Offenbarung auf eine Erkennung von freien Steckplätzen in einem elektrischen Verteiler. Es versteht sich, dass die vorstehend beschriebene Technik auch für eine Erkennung von freien Installationsplätzen bzw. freien Plätzen in einem elektrischen Verteiler eingesetzt werden kann.

Die eingangs gestellte Aufgabe wird ferner durch ein Prüfmodul zum Prüfen eines elektrischen Verteilers in einem Niederspannungsnetz, das dazu eingerichtet ist, eines der vorstehend beschriebenen Verfahren auszuführen, gelöst.

Die vorliegende Offenbarung betrifft auch einen Nutzer-Client, der dazu eingerichtet ist, von dem Prüfmodul das Prüfergebnis zu erhalten und das Prüfergebnis einem Nutzer auszugeben.

Des Weiteren betrifft die vorliegende Offenbarung ein Prüfsystem umfassend ein Prüfmodul und ein erstes Objekterkennungsmodul und/oder ein zweites Objekterkennungsmodul.

Die vorliegende Offenbarung betrifft auch ein Verfahren zum Trainieren eines Objekterkennungsmoduls umfassend ein Deep Neuronal Network, wobei das Verfahren die Schritte Erhalten von kommentierten digitalen Bildern eines elektrischen Verteilers umfassend eine elektrische Komponente und/oder einen freien Steckplatz für eine elektrische Komponente und Trainieren des Deep Neuronal Networks mit den kommentierten digitalen Bildern umfasst. Bei den kommentierten digitalen Bildern kann es sich um Bilder handeln, in denen elektrische Komponenten und/oder freie Steckplätze mit Hilfe von Bounding Boxen bezeichnet ("gelabelt") wurden.

Ferner umfasst die vorliegende Offenbarung ein Objekterkennungsmodul, beispielsweise ein erstes und/oder eine zweites Objekterkennungsmodul, mit einem Deep Neuronal Network, welches dazu eingerichtet ist, das Verfahren zum Trainieren eines Objekterkennungsmoduls auszuführen.

Die oben beschriebenen Verfahren, Vorrichtungen, Systeme, Aspekte, Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren, Vorrichtungen und Systeme ergeben sich aus der nachfolgenden Beschreibung von Ausführungsbeispielen und der Figuren.
- Fig. 1: zeigt eine schematische Darstellung eines Ausführungsbeispiels eines Systems zum Prüfen eines elektrischen Verteilers;
- Fig. 2: zeigt ein Ausführungsbeispiel eines Verfahrens zum Prüfen eines elektrischen Verteilers; und

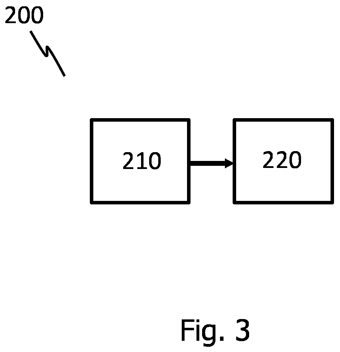

- Fig. 3: zeigt ein Ausführungsbeispiel eines Verfahrens zum Trainieren eines Objekterkennungsmoduls.

### DETAILLIERTE BESCHREIBUNG

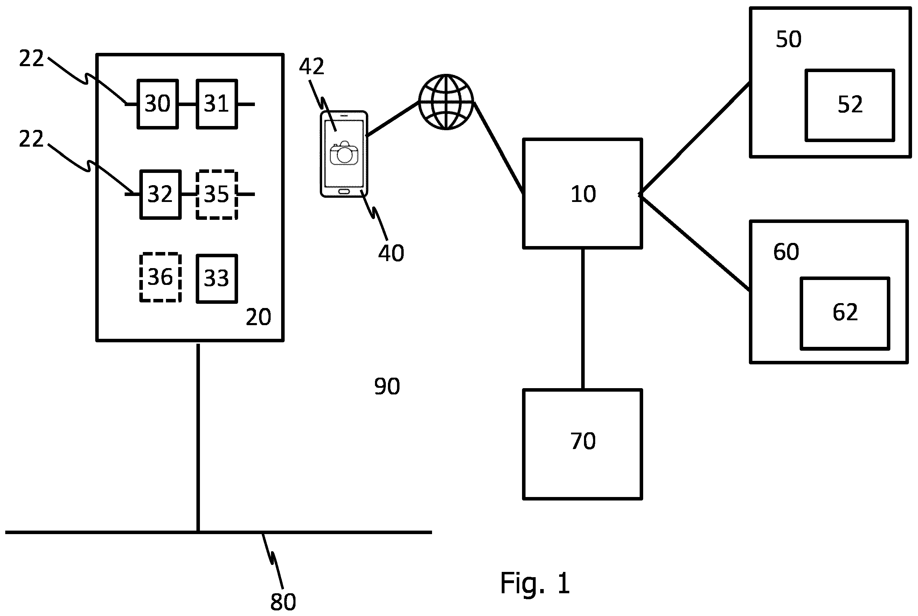

Die Fig. 1 zeigt eine schematische Darstellung eines Ausführungsbeispiels eines Systems zum Prüfen eines elektrischen Verteilers.

Das System umfasst ein Prüfmodul 10, ein erstes Objekterkennungsmodul 50 mit einem neuronalen Netz 52 und ein zweites Objekterkennungsmodul 60 mit einem neuronalen Netz 62. Das Prüfmodul 10 ist auf einem ersten Server installiert (in Fig. 1 nicht gezeigt) und die beiden Objekterkennungsmodule 50 und 60 sind auf einem zweiten Server (in Fig. 1 nicht gezeigt) installiert. Das Prüfmodul 10 ist über ein Kommunikationsnetz, beispielsweise das Internet, mit dem ersten Objekterkennungsmodul 50 und dem zweiten Objekterkennungsmodul 60 verbunden. Es ist auch denkbar, dass sich das Prüfmodul 10 und die beiden Objekterkennungsmodul 50 und 60 in demselben Server befinden. Ferner ist es denkbar, dass es sich bei dem ersten Objekterkennungsmodul 50 und dem zweiten Objekterkennungsmodul 60 um das gleiche Objekterkennungsmodul handelt. Das Prüfmodul 10 und das zweite Objekterkennungsmodul 60 können auch auf einem ersten Server installiert sein, wobei das erste Objekterkennungsmodul 50 auf einem zweiten Server installiert ist.

Die Fig. 1 zeigt ferner ein Mobilfunkgerät 40 mit einer Kamera, einen Nutzer-Client 70, der mit dem Prüfmodul 10 in Kommunikationsverbindung steht, und einen elektrischen Verteiler 20. Der elektrische Verteiler 20 befindet sich in einem elektrifizierten Gebäude (in Fig. 1 nicht gezeigt) und ist an ein Niederspannungsnetz 80 angeschlossen.

Der elektrische Verteiler 20 umfasst eine Vielzahl von Tragschienen 22, eine Vielzahl von an den Tragschienen 22 angebrachten elektrischen Komponenten 30, 31, 32 und eine Vielzahl von freien Steckplätzen 35. Des Weiteren gibt es in dem elektrischen Verteiler 20 elektrische Komponenten 33, die nicht an Tragschienen befestigt sind, sowie weitere freie Steckplätze 36.

Will der Eigentümer des elektrifizierten Gebäudes, in dem sich der elektrische Verteiler 20 befindet, eine Wallbox zum Laden seines Elektrofahrzeugs mit elektrischer Energie installieren, so muss er üblicherweise zunächst einen Termin mit einem Installateur ausmachen, während dem der Installateur prüft, ob eine Installation einer Wallbox möglich ist bzw. welche Änderungen an dem elektrischen Verteiler 20 vorgenommen werden müssen, damit eine Wallbox installiert werden kann. Dieser Aufwand kann mit Hilfe des vorliegenden Prüfsystems vermieden werden.

Gemäß diesem Ausführungsbeispiel kann der Eigentümer des elektrifizierten Gebäudes mit seinem Mobilfunkgerät 40 ein Foto 42 des elektrischen Verteilers 20 aufnehmen, dieses über ein Kommunikationsnetz (beispielsweise das Internet) an das Prüfmodul 10 senden und erhält über einen Nutzer-Client 70, der beispielsweise auf dem Mobilfunkgerät 40 installiert ist, ein Prüfergebnis. Das Prüfergebnis kann beispielsweise eine Aussage umfassen, dass der elektrische Verteiler 20 zur Installation einer Wallbox geeignet oder nicht geeignet ist. Insbesondere kann der elektrische Verteiler 20 zur Installation einer Wallbox ungeeignet sein, da in dem elektrischen Verteiler 20 eine essenzielle elektrische Komponente zur Installation einer Wallbox fehlt. Das Prüfergebnis kann ferner dahingehende Information enthalten, was an dem elektrischen Verteiler 20 geändert werden muss, damit eine Installation einer Wallbox möglich ist. Bei dem Nutzer-Client 70 kann es sich beispielsweise um eine App oder eine Homepage handeln, auf die der Nutzer, beispielsweise über ein mit einem Passwort gesichertes Kundenkonto, Zugriff hat.

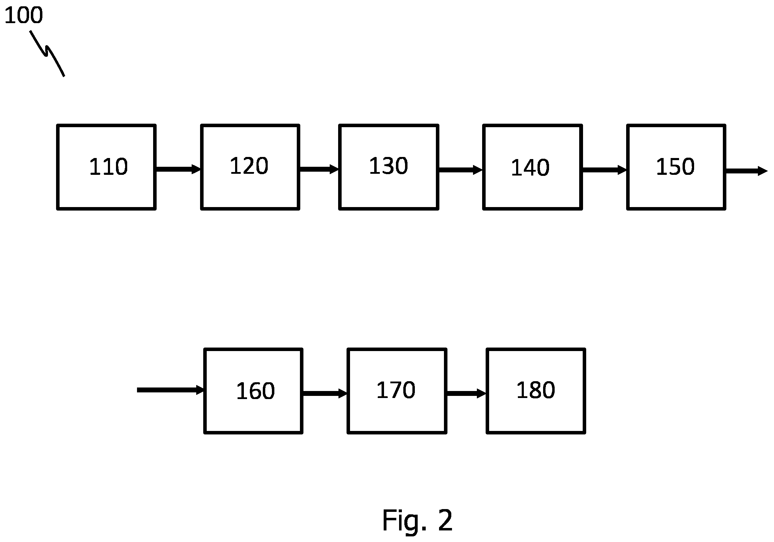

Die Fig. 2 zeigt ein Ausführungsbeispiel eines Verfahrens 100 zum Prüfen eines elektrischen Verteilers. Das Verfahren 100 wird anhand des Prüfsystems der Fig. 1 beschrieben.

In einem ersten Schritt 110 erhält das Prüfmodul 10 über ein Kommunikationsnetz ein von dem Mobilfunkgerät 40 aufgenommenes digitales Bild 42 des Verteilers 20. In einem optionalen weiteren Schritt wird das digitale Bild 42 von dem Prüfmodul 10 aufbereitet, sodass es einem neuronalen Netz zugeführt werden kann. Anschließend wird in einem Schritt 120 das digitale Bild 42 über ein Kommunikationsnetz dem ersten Objekterkennungsmodul 50 zugeführt. Das erste Objekterkennungsmodul 50 umfasst ein neuronales Netz 52, welches als Deep Neuronal Network ausgebildet ist. Das neuronalen Netz 52 führt ein erstes Objekterkennungsverfahren zum Erkennen einer elektrischen Komponente in dem digitalen Bild 42 aus. Beispielsweise erkennt das erste Objekterkennungsverfahren einen Leitungsschutzschalter 30 in dem digitalen Bild 42 des elektrischen Verteilers 20.

Insbesondere bestimmt das erste Objekterkennungsverfahren mit welcher Wahrscheinlichkeit es sich bei dem Element 30 um einen Leistungsschutzschalter handelt.

Das erste Objekterkennungsverfahren kann auch auf Deep Learning-Verfahren basieren. So kann die Erkennung der elektrischen Komponente mit Hilfe einer Bounding Box erfolgen. Beispielsweise kann ein einstufiges neuronales Netz verwendet werden, in dem ein CNN mit Hilfe von Ankerboxen Netzvorhersagen für Regionen im gesamten Bild trifft, wobei die Vorhersagen dekodiert werden, um Bounding Boxen für Objekte, d.h., die elektrische Komponenten, zu erzeugen. Ferner kann das erste Objekterkennungsverfahren von einem zweistufigen neuronalen Netz ausgeführt werden. Das erste Objekterkennungsverfahren kann auch auf Techniken zum maschinellen Lernen basieren.

In dem ersten Objekterkennungsmodul 50 oder dem Prüfmodul 20 wird bestimmt, ob es sich bei dem Element 30 tatsächlich um einen Leistungsschutzschalter handelt, beispielsweise durch Vergleich der durch das erste Objekterkennungsverfahren bestimmten Wahrscheinlichkeit mit einem Schwellwert. So erhält das Prüfmodul in einem Schritt 130 ein Ergebnis der erstes Objekterkennung. Bei dem Ergebnis kann es sich um die Wahrscheinlichkeit handeln, mit der es sich bei dem Element 30 tatsächlich um einen Leistungsschutzschalter handelt. Es kann sich jedoch auch um ein Ergebnis handeln, dass es ein Leistungsschutzschalter erkannt wurde. So kann der Vergleich der von dem neuronalen Netz 52 ausgegebenen Wahrscheinlichkeit mit einem Schwellwert in dem ersten Objekterkennungsmodul 50 oder in dem Prüfmodul 10 erfolgen.

Anschließend wird in einem Schritt 140 von dem Prüfmodul 10 das Prüfergebnis an den Nutzer-Client 70 gesendet, der das Prüfergebnis an einen Nutzer, beispielsweise über einen Bildschirm, ausgibt.

Das Ergebnis der ersten Objekterkennung kann ferner eine Position des Leistungsschutzschalters 30 in dem digitalen Bild 42 bzw. dem elektrischen Verteiler 20 umfassen. Die Position kann insbesondere zweidimensionale Bildkoordinaten umfassen. In diesem Fall umfasste das Verfahren 100 den weiteren Schritt Vergleichen 150 der Position des Leistungsschutzschalters 30 mit einer ersten vorgegebenen Position, beispielsweise vorgegebenen zweidimensionalen Koordinaten. So kann durch den Vergleich geprüft werden, ob sich der Leistungsschutzschalter 30 an einer vorbestimmten Position, oder einer von einer Vielzahl von vorbestimmten Positionen, in dem elektrischen Verteiler 20 befindet. Befindet sich der Leistungsschutzschalter an einer gewünschten Position in dem elektrischen Verteiler, so kann der elektrische Verteiler 20 für eine Installation einer Wallbox geeignet sein.

Entsprechend erfolgt die Ausgabe 140 des Prüfergebnisses an den Nutzer-Client 70 in Abhängigkeit von dem Vergleich der Position des Leistungsschutzschalters 30 mit der ersten vorgegebenen Position.

Gemäß einer Weiterbildung des Verfahrens 100 kann das Prüfmodul 10 ferner prüfen, ob in dem elektrischen Verteiler 20 freie Steckplätze 35, 36 zur Verfügung stehen. Dazu wird in einem Schritt 160 von dem Prüfmodul 10 das digitale Bild 42 dem zweiten Objekterkennungsmodul 60 zum Ausführen einer zweiten Objekterkennung in dem digitalen Bild 42 zugeführt. Ähnlich wie das erste Objekterkennungsmodul 50 umfasst das zweite Objekterkennungsmodul 60 ein Deep Neuronal Network 62. Das Deep Neuronal Network 62 kann eines der vorstehend unter Bezugnahme auf das Deep Neuronal Network 52 beschriebenes Objekterkennungsverfahren ausführen, sodass hier auf eine erneute Beschreibung verzichtet wird. Das zweite Objekterkennungsverfahren kann auch ohne ein neuronales Netz, beispielsweise durch Vergleichsregeln in einem Expertensystem, ausgeführt werden.

Das zweite Objekterkennungsverfahren erkennt, ob ein freier Steckplatz 35, 36 in dem digitalen Bild 42, d.h. dem elektrischen Verteiler 20, vorhanden ist. Ferner kann das zweite Objekterkennungsverfahren erkennen, an welcher Position (beispielsweise zweidimensionale Bildkoordinaten) ein freier Steckplatz 35, 36 in dem digitalen Bild 42 bzw. dem elektrischen Verteiler 20 vorhanden ist. In einem Schritt 170 erhält das Prüfmodul 10 das Ergebnis der zweiten Objekterkennung von dem zweiten Objekterkennungsmodul 60. Wie bei dem ersten Objekterkennungsverfahren kann es sich bei dem Ergebnis des zweiten Objekterkennungsverfahrens um eine Wahrscheinlichkeit oder ein bereits anhand eines Schwellenwerts getroffenes Prüfergebnis handeln.

Anschließend wird in einem Schritt 180 im Prüfmodul 10 die Position des freien Steckplatzes 35, 36 mit einer vorgegebenen Position verglichen. Dabei kann es sich um einen Vergleich von zwei zweidimensionalen Bildkoordination handeln. Der Vergleich kann auch einen Vergleich der Position des freien Steckplatzes 35, 36 mit einer Vielzahl von vorgegebenen Positionen umfassen. Beispielsweise kann festgestellt werden, dass sich der freie Steckplatz 35, 36 an einer gewünschten Position in dem elektrischen Verteiler 20 befindet, sodass in diesen eine notwendige elektrische Komponente zur Installation der Wallbox gesteckt werden kann. Entsprechend hängt das Ausgeben 140 des Prüfergebnisses vom Vergleich der Position des freien Steckplatzes 35, 36 mit der vorgegebenen Position ab.

Für eine verbesserte Objekterkennung kann das Verfahren 100 des Weiteren die folgenden Schritte umfassen: Zuführen, durch das Prüfmodul 10 oder das erste Objekterkennungsmodul 50, des Ergebnisses der ersten Objekterkennung, insbesondere die Position der elektrischen Komponente 30, dem zweiten Objekterkennungsmodul 60, so dass das Erkennen der Position des freien Steckplatzes 35 in Abhängigkeit von dem Ergebnis der ersten Objekterkennung, insbesondere in Abhängigkeit von der Position der elektrischen Komponente 30 erfolgt.

Das Verfahren 100 kann ferner den Schritt Bestimmen, basierend auf dem Ergebnis der ersten Objekterkennung und dem Ergebnis der zweiten Objekterkennung, einer Länge eines elektrischen Kabels zwischen einer Position einer bestimmten elektrischen Komponente 30 und einer Position eines bestimmten freien Steckplatzes 35 umfassen. Dadurch kann auf einfache Weise bestimmt werden, welcher Aufwand, insbesondere welcher Verkabelungsaufwand, zum Anschluss der Wallbox an dem elektrischen Verteiler 20 notwendig ist bzw. welche Materialien zu dem Installationstermin der Wallbox vorgesehen werden müssen.

Die Fig. 2 zeigt ein Ausführungsbeispiel eines Verfahrens 200 zum Trainieren eines Objekterkennungsmoduls. Das Verfahren 200 wird im Folgenden mithilfe des ersten Objekterkennungsmoduls 50 beschrieben. Das Verfahren 200 kann auch durch das zweite Objekterkennungsmodul 60 oder ein anderes Objekterkennungsmodul ausgeführt werden.

Das Verfahren 200 umfasst die Schritte Erhalten 210 von kommentierten digitalen Bildern eines elektrischen Verteilers 20 umfassend eine elektrische Komponente 30, 31, 32, 33 und/oder einen freien Steckplatz 35, 36 für eine elektrische Komponente, und Trainieren 220 des Deep Neuronal Networks 52 mit den kommentierten digitalen Bildern.

Um eine Trainingsaufgabe zu lösen kann das Verfahren 200 ferner die folgenden Schritte umfassen:
(1) Bereitstellen eines geeigneten Satzes von Trainingsmustern und eines geeigneten Validierungssatzes oder eine Auswahl geeigneter Muster aus relevanten und bekannten Sätzen.
(2) Konfigurieren von strukturellen Parametern eines Lernmodells, z.B. für ein künstliches neuronales Netz die allgemeinen Parameter wie die Anordnung (Arten, Anzahl, Größe, Verbindungen) der Schichten und die spezifischeren Parameter des neuronalen Netzes. Für ein CNN kann dies beispielsweise die Kernelgröße für jede Schicht, die Anzahl an Kernel für jede Schicht, den Faltungsschritt und den Umfang des Zero-Paddings umfassen.
(3) Auswählen einer Zielfunktion.
(4) Abstimmen und Feinabstimmen der Trainingsparameter, z.B. für ein künstliches neuronales Netz die Lernrate, die Gewichtungsabnahme, Impulswerte, Anzahl der Iterationen, Epochen und Stapelgröße.

In den vorgestellten Ausführungsbeispielen sind unterschiedliche Merkmale und Funktionen der vorliegenden Offenbarung getrennt voneinander sowie in bestimmten Kombinationen beschrieben worden. Es versteht sich jedoch, dass alle oder einige dieser Merkmale und Funktionen, wo dies nicht explizit ausgeschlossen ist, miteinander frei kombinierbar sind.

## Patentansprüche

1. Prüfverfahren (100) für einen elektrischen Verteiler (20) in einem Niederspannungsnetz (80), umfassend
Erhalten (110) eines digitalen Bildes (42) des elektrischen Verteilers (20);
Zuführen (120) des digitalen Bildes (42) einem ersten Objekterkennungsmodul (50) zum Ausführen einer ersten Objekterkennung in dem digitalen Bild (42) zum Erkennen einer elektrischen Komponente (30, 31, 32, 33);
Erhalten (130) eines Ergebnisses der ersten Objekterkennung; und
Ausgeben (140) eines Prüfergebnisses in Abhängigkeit von dem Ergebnis der ersten Objekterkennung
**gekennzeichnet durch**
Zuführen (160) des digitalen Bildes (42) einem zweiten Objekterkennungsmodul (60) zum Ausführen einer zweiten Objekterkennung in dem digitalen Bild (42) zum Erkennen eines freien Steckplatzes (35, 36) für eine elektrische Komponente und einer Position des freien Steckplatzes (35, 36) in dem digitalen Bild (42);
Erhalten (170) eines Ergebnisses der zweiten Objekterkennung; und
Zuführen des Ergebnisses der ersten Objekterkennung, insbesondere die Position der elektrischen Komponente (30, 31, 32, 33), dem zweiten Objekterkennungsmodul (60), so dass das Erkennen der Position des freien Steckplatzes (35, 36) in Abhängigkeit von dem Ergebnis der ersten Objekterkennung, insbesondere in Abhängigkeit von der Position der elektrischen Komponente (30, 31, 32, 33), erfolgt.

2. Prüfverfahren (100) nach Anspruch 1, wobei das Ergebnis der ersten Objekterkennung eine Position der elektrischen Komponente (30, 31, 32, 33) in dem digitalen Bild (42) umfasst, und das Prüfverfahren (100) ferner umfasst:
Vergleichen (150) der Position der elektrischen Komponente (30, 31, 32, 33) mit einer ersten vorgegebenen Position; und
Ausgeben (140) des Prüfergebnisses in Abhängigkeit von dem Vergleich.

3. Prüfverfahren (100) nach einem der vorhergehenden Ansprüche, wobei es sich bei der elektrischen Komponente (30, 31, 32, 33) um eine zum Laden eines Elektrofahrzeugs mit elektrischer Energie notwendige Komponente handelt.

4. Prüfverfahren (100) nach Anspruch 1, ferner umfassend
Vergleichen (180) der Position des freien Steckplatzes (35, 36) mit einer zweiten vorgegebenen Position, wobei
das Ausgeben (140) des Prüfergebnisses vom Vergleich der Position des freien Steckplatzes (35, 36) mit der zweiten vorgegebenen Position abhängt.

5. Prüfverfahren (100) nach Anspruch 1, wobei
das Ergebnis der zweiten Objekterkennung einer Größe des freien Steckplatzes (35, 36) umfasst, und das Verfahren (100) ferner umfasst:
Vergleichen der Größe des freien Steckplatzes mit einer vorgegebenen Größe, wobei das Ausgeben (160) des Prüfergebnisses von dem Vergleich der Größe des freien Steckplatzes (35, 36) mit der vorgegebenen Größe abhängt, wobei optional,
die vorgegebene Größe eine Größe einer zum Laden eines Elektrofahrzeugs mit elektrischer Energie notwendigen elektrischen Komponente ist, die in dem elektrischen Verteiler (20) fehlt.

6. Prüfverfahren (100) nach einem der Ansprüche 1 oder 5, ferner umfassend
Bestimmen, basierend auf dem Ergebnis der ersten Objekterkennung und dem Ergebnis der zweiten Objekterkennung, einer Länge eines elektrischen Kabels zwischen einer Position der elektrischen Komponente (30, 31, 32, 33) und einer Position des freien Steckplatzes (35, 36).

7. Prüfverfahren (100) nach einem der vorhergehenden Ansprüche, wobei das erste Objekterkennungsmodul (50) ein Deep Neuronal Network (52) umfasst.

8. Prüfverfahren (100) nach Anspruch 7, ferner umfassend
Verifizieren des Ergebnisses der ersten Objekterkennung; und
Zuführen des verifizierten Ergebnisses der ersten Objekterkennung dem ersten Objekterkennungsmodul (50) zum Trainieren des Deep Neuronal Network (52).

9. Prüfmodul (10) zum Prüfen eines elektrischen Verteilers (20) in einem Niederspannungsnetz (80), das dazu eingerichtet ist, das Verfahren (100) nach einem der vorhergehenden Ansprüche auszuführen.

10. Nutzer-Client (70), der dazu eingerichtet ist, von dem Prüfmodul (10) nach Anspruch 9 das Prüfergebnis zu erhalten und das Prüfergebnis für einen Nutzer zu visualisieren.

11. Prüfsystem, umfassend
das Prüfmodul (20) nach Anspruch 9; und
ein erstes Objekterkennungsmodul (50) und ein zweites Objekterkennungsmodul (60).

## Claims

1. Test method (100) for an electrical distributor (20) in a low-voltage network (80), comprising
obtaining (110) a digital image (42) of the electrical distributor (20);
supplying (120) the digital image (42) to a first object recognition module (50) for performing a first object recognition in the digital image (42) for recognizing an electrical component (30, 31, 32, 33);
obtaining (130) a result of the first object recognition; and
outputting (140) a test result depending on the result of the first object recognition **characterized by**
supplying (160) the digital image (42) to a second object recognition module (60) for performing a second object recognition in the digital image (42) for recognizing a free slot (35, 36) for an electrical component and a position of the free slot (35, 36) in the digital image (42);
obtaining (170) a result of the second object recognition; and
supplying the result of the first object recognition, in particular the position of the electrical component (30, 31, 32, 33), to the second object recognition module (60), so that the recognition of the position of the free slot (35, 36) is performed depending on the result of the first object recognition, in particular depending on the position of the electrical component (30, 31, 32, 33).

2. Test method (100) according to claim 1, wherein the result of the first object recognition comprises a position of the electrical component (30, 31, 32, 33) in the digital image (42), and the test method (100) further comprises:
comparing (150) the position of the electrical component (30, 31, 32, 33) with a first predetermined position; and
outputting (140) the test result depending on the comparison.

3. Test method (100) according to one of the preceding claims, wherein the electrical component (30, 31, 32, 33) is a component necessary for charging an electric vehicle with electrical energy.

4. Test method (100) according to claim 1, further comprising
comparing (180) the position of the free slot (35, 36) with a second predetermined position, wherein
the outputting (140) of the test result depends on the comparison of the position of the free slot (35, 36) with the second predetermined position.

5. Test method (100) according to claim 1, wherein
the result of the second object recognition comprises a size of the free slot (35, 36), and the method (100) further comprises:
comparing the size of the free slot with a predetermined size, wherein
the outputting (160) of the test result depends on the comparison of the size of the free slot (35, 36) with the predetermined size, wherein optionally,
the predetermined size is a size of an electrical component necessary for charging an electric vehicle with electrical energy, which is missing in the electrical distributor (20).

6. Test method (100) according to one of claims 1 or 5, further comprising
determining, based on the result of the first object recognition and the result of the second object recognition, a length of an electrical cable between a position of the electrical component (30, 31, 32, 33) and a position of the free slot (35, 36).

7. Test method (100) according to one of the preceding claims, wherein
the first object recognition module (50) comprises a deep neural network (52).

8. Test method (100) according to claim 7, further comprising
verifying the result of the first object recognition; and
supplying the verified result of the first object recognition to the first object recognition module (50) for training the deep neural network (52).

9. Test module (10) for testing an electrical distributor (20) in a low-voltage network (80), which is configured to carry out the method (100) according to one of the preceding claims.

10. User client (70), which is configured to obtain the test result from the test module (10) according to claim 9 and to visualize the test result for a user.

11. Test system, comprising
the test module (20) according to claim 9; and
a first object recognition module (50) and a second object recognition module (60).

## Revendications

1. Procédé de contrôle (100) pour un distributeur électrique (20) dans un réseau basse tension (80), comprenant
l'obtention (110) d'une image numérique (42) du distributeur électrique (20) ;
l'amenée (120) de l'image numérique (42) à un premier module de reconnaissance d'objets (50) pour exécuter une première reconnaissance d'objets dans l'image numérique (42) pour reconnaître un composant électrique (30, 31, 32, 33) ;
l'obtention (130) d'un résultat de la première reconnaissance d'objets ; et
l'émission (140) d'un résultat de contrôle en fonction du résultat de la première reconnaissance d'objets
**caractérisé par**
l'amenée (160) de l'image numérique (42) à un deuxième module de reconnaissance d'objets (60) pour exécuter une deuxième reconnaissance d'objets dans l'image numérique (42) pour reconnaître un emplacement libre (35, 36) pour un composant électrique et une position de l'emplacement libre (35, 36) dans l'image numérique (42) ;
l'obtention (170) d'un résultat de la deuxième reconnaissance d'objets ; et
l'amenée du résultat de la première reconnaissance d'objets, en particulier la position du composant électrique (30, 31, 32, 33), au deuxième module de reconnaissance d'objets (60), de sorte que la reconnaissance de la position de l'emplacement libre (35, 36) s'effectue en fonction du résultat de la première reconnaissance d'objets, en particulier en fonction de la position du composant électrique (30, 31, 32, 33).

2. Procédé de contrôle (100) selon la revendication 1, dans lequel le résultat de la première reconnaissance d'objets comprend une position du composant électrique (30, 31, 32, 33) dans l'image numérique (42), et le procédé de contrôle (100) comprend en outre :
la comparaison (150) de la position du composant électrique (30, 31, 32, 33) à une première position prédéterminée ; et
l'émission (140) du résultat de contrôle en fonction de la comparaison.

3. Procédé de contrôle (100) selon l'une des revendications précédentes, dans lequel le composant électrique (30, 31, 32, 33) est un composant nécessaire pour charger un véhicule électrique en énergie électrique.

4. Procédé de contrôle (100) selon la revendication 1, comprenant en outre
la comparaison (180) de la position de l'emplacement libre (35, 36) à une deuxième position prédéterminée, dans lequel
l'émission (140) du résultat de contrôle dépend de la comparaison de la position de l'emplacement libre (35, 36) à la deuxième position prédéterminée.

5. Procédé de contrôle (100) selon la revendication 1, dans lequel
le résultat de la deuxième reconnaissance d'objets comprend une taille de l'emplacement libre (35, 36), et le procédé (100) comprend en outre :
la comparaison de la taille de l'emplacement libre à une taille prédéterminée, dans lequel
l'émission (160) du résultat de contrôle dépend de la comparaison de la taille de l'emplacement libre (35, 36) à la taille prédéterminée, dans lequel optionnellement,
la taille prédéterminée est une taille d'un composant électrique nécessaire pour charger un véhicule électrique en énergie électrique, qui manque dans le distributeur électrique (20).

6. Procédé de contrôle (100) selon l'une des revendications 1 ou 5, comprenant en outre
la détermination, sur la base du résultat de la première reconnaissance d'objets et du résultat de la deuxième reconnaissance d'objets, d'une longueur d'un câble électrique entre une position du composant électrique (30, 31, 32, 33) et une position de l'emplacement libre (35, 36).

7. Procédé de contrôle (100) selon l'une des revendications précédentes, dans lequel
le premier module de reconnaissance d'objets (50) comprend un réseau neuronal profond (52).

8. Procédé de contrôle (100) selon la revendication 7, comprenant en outre
la vérification du résultat de la première reconnaissance d'objets ; et
l'amenée du résultat vérifié de la première reconnaissance d'objets au premier module de reconnaissance d'objets (50) pour entraîner le réseau neuronal profond (52).

9. Module de contrôle (10) pour contrôler un distributeur électrique (20) dans un réseau basse tension (80), qui est configuré pour exécuter le procédé (100) selon l'une des revendications précédentes.

10. Client utilisateur (70), qui est configuré pour obtenir du module de contrôle (10) selon la revendication 9 le résultat de contrôle et pour visualiser le résultat de contrôle pour un utilisateur.

11. Système de contrôle, comprenant
le module de contrôle (20) selon la revendication 9 ; et
un premier module de reconnaissance d'objets (50) et un deuxième module de reconnaissance d'objets (60).
